## Europäisches Patentamt
## European Patent Office
## Office européen des brevets

(19)

(11) Numéro de publication: **0 003 156**
**A1**

(12) **DEMANDE DE BREVET EUROPEEN**

(21) Numéro de dépôt: 79200022.6

(22) Date de dépôt: 12.01.79

(51) Int. Cl.²: **C 08 L 27/06**
**C 08 K 5/00**

(30) Priorité: 16.01.78 FR 7801310

(43) Date de publication de la demande:
25.07.79 Bulletin 79/15

(84) Etats contractants désignés:
BE CH DE FR GB IT LU NL SE

(71) Demandeur: Société Anonyme dite: SOLVAY & Cie
Rue du Prince Albert, 33
B-1050 Bruxelles(BE)

(72) Inventeur: Guyaux, Jean
Rue Vanderhoeft, 7
B-1030 Bruxelles(BE)

(74) Mandataire: Eischen, Roland
Solvay & Cie, Dept. de la Propriété Industrielle Rue de
Ransbeek 310
B-1120 Bruxelles(BE)

(54) **Compositions stabilisées à la chaleur à base de polymères du chlorure de vinyle contenant un ester partiel de pentaérythritol.**

(57) L'invention concerne des compositions stabilisées à la chaleur à base de polymères du chlorure de vinyle qui ne conduisent pas à la formation de dépôts lors de leur transformation en objets façonnés.

Les compositions comprennent un stabilisant thermique primaire usuel, avantageusement un système stabilisant calcium-zinc, et un ester partiel de pentaérythritol et d'un acide gras présentant un taux moyen d'estérification compris entre 1 et 2 et soluble à raison de 95% en poids au moins dans le dichlorméthane à 25°C. Les compositions conviennent particulièrement pour la fabrication d'emballages transparents, tels que des corps creux.

EP 0 003 156 A1

Croydon Printing Company Ltd.

Compositions stabilisées à la chaleur à base de polymères
du chlorure de vinyle contenant un ester partiel de pentaérythritol

Cas S. 78/2

La Société Anonyme dite : SOLVAY & Cie

La présente invention concerne des compositions stabilisées ·à la chaleur à base de polymères du chlorure de vinyle. Elle concerne plus particulièrement des compositions à base de polymères du chlorure de vinyle contenant un ester partiel de pentaérythritol, qui se laissent aisément mettre en oeuvre et présentent une bonne stabilité thermique.

La stabilité thermique d'un polymère s'évalue généralement à court terme et à long terme. La stabilité thermique à court terme, ou stabilité thermique initiale, est l'aptitude du polymère à résister à la dégradation provoquée par l'élévation de température auquel il faut le soumettre pour y incorporer les additifs usuels et le mettre en oeuvre. La stabilité thermique à long terme est mesurée par le temps qui s'écoule avant qu'un échantillon de polymère noircisse dans des conditions données. Une mauvaise stabilité thermique initiale se marque par une altération de la coloration des objets façonnés qui est d'autant plus importante que la stabilité est faible.

Pour de nombreuses applications des polymères du chlorure de vinyle, telles que par exemple la fabrication de corps creux et de feuilles calandrées destinés à l'emballage, il est impérieux de disposer de polymères qui présentent, non seulement une excellente stabilité thermique à long terme, mais également une bonne stabilité thermique initiale.

- 2 -

0003156

Par ailleurs, il est hautement souhaitable de disposer de compositions qui ne collent pas à l'appareillage de mise en oeuvre et qui ne conduisent pas à la formation de dépôts lors de leur transformation en objets façonnés, car l'encrassement des installations de mise en oeuvre nuit à leur productivité et à la qualité des objets fabriqués.

Dans la demande de brevet allemand DOS 1 669 975 déposée le 3 août 1967 au nom de Dynamit Nobel AG, on décrit l'utilisation d'esters et d'éthers partiels de pentaérythritol, et notamment de mono-esters de pentaérythritol, pour améliorer la stabilité thermique à long terme des polymères du chlorure de vinyle. On recommande plus particulièrement l'utilisation conjointe de pentaérythritol et d'esters partiels de pentaérythritol.

On a constaté que la stabilisation des polymères du chlorure de vinyle au moyen de tels mélanges de pentaérythritol et d'esters partiels de pentaérythritol entraîne de sérieuses difficultés lors de la mise en oeuvre de ces compositions du fait, notamment, de la formation de dépôts sur les filières et les noyaux lors de l'extrusion, sur les calandres lors du calandrage et sur les moules lors de l'extrusion-soufflage.

La présente invention, telle qu'elle est caractérisée dans les revendications, a pour but de procurer des compositions stabilisées à la chaleur à base de polymères du chlorure de vinyle qui ne présentent pas les inconvénients précités et qui soient aptes à être transformées sans aucun problème en objets façonnés présentant un excellent coloris initial, et ce, sur des machines fonctionnant à cadence élevée.

Par taux moyen d'estérification on entend désigner le rapport entre le nombre de radicaux dérivés de l'acide gras et le nombre de radicaux dérivés du pentaérythritol présents dans le produit d'estérification. Il peut être évalué de manière connue en soi, par exemple, par spectrométrie infra-rouge ou par résonance magnétique nucléaire.

On a constaté que l'utilisation d'esters partiels de pentaérythritol dont la solubilité dans le dichlorméthane à 25°C est inférieure à 95 % en poids conduit à de sérieuses difficultés lors de la mise en oeuvre. De même, l'utilisation d'esters partiels de pentaérythritol qui répondent aux spécifications de solubilité, mais dont le taux d'estérification moyen est en dehors des limites revendiquées conduit à des compositions dont la stabilité thermique à court terme et, partant la coloration initiale, laissent à désirer.

De préférence, on utilise suivant l'invention des esters partiels dont la solubilité dans le dichlorméthane à 25°C est au moins égale à 99 %. Les meilleurs résultats sont obtenus lorsque la solubilité est totale.

Les esters partiels de pentaérythritol utilisés suivant l'invention peuvent dériver de n'importe quel acide gras. Par acide gras, on entend désigner tous les acides aliphatiques monocarboxyliques saturés ou éthyléniquement insaturés contenant au moins trois atomes de carbone. Cependant, dans le cas où le nombre total d'atomes de carbone de ces acides est fort élevé, un phénomène secondaire de sur-lubrification peut apparaître. Généralement, on utilise donc des esters partiels de pentaérythritol dérivés d'acides gras comprenant au plus 30 atomes de carbone. Il est particulièrement avantageux d'utiliser ceux dérivés des acides gras comprenant de 8 à 20 atomes de carbone au total. A titre d'exemples de pareils acides, on peut mentionner les acides caprylique, caprique, laurique, palmitique, stéarique, oléique et linoléique. Parmi ceux-ci, on donne la préférence aux acides gras saturés. Des acides gras saturés particulièrement préférés sont les acides stéarique et laurique. L'acide laurique est un acide tout particulièrement préféré.

Comme mentionné ci-dessus, il importe d'utiliser des esters partiels de pentaérythritol présentant un taux moyen d'estérification compris entre 1 et 2. Suivant un mode de réalisation préféré, on utilise des esters présentant un taux moyen d'estérification allant de 1,1 à 1,5. Les meilleurs résultats sont obtenus lorsque le taux d'estérification va de 1,1 à 1,3.

La quantité d'ester partiel de pentaérythritol présente dans les compositions conformes à l'invention n'est pas critique. Habituellement, on en utilise de 0,5 à 5 parties pour 100 parties en poids de polymère du chlorure de vinyle. De préférence, on en utilise de 1,5 à 2,5 parties.

Par ailleurs, tous les stabilisants thermiques primaires usuels des polymères du chlorure de vinyle conviennent généralement à la réalisation de compositions selon l'invention. A titre d'exemples de pareils stabilisants primaires, on peut citer les sels organiques et inorganiques de plomb, les organo-étains, ainsi que les systèmes baryum-cadmium et calcium-zinc. Une liste non limitative de stabilisants thermiques primaires usuels des polymères du chlorure de vinyle est reprise dans l'ouvrage de H.A. Sarvetnick, Reinhold Plastics Application Series, 1969 (p.98-99).

Il est toutefois particulièrement avantageux d'utiliser comme stabilisants thermiques primaires des systèmes calcium-zinc.

On a en effet observé que c'est en présence de tels stabilisants thermiques primaires, connus en eux-mêmes, que l'effet bénéfique des esters partiels de pentaérythritol sur la coloration initiale des polymères du chlorure de vinyle est le plus marqué.

Des compositions tout particulièrement préférées de la présente invention contiennent donc comme stabilisant thermique primaire un système calcium-zinc comprenant un composé de calcium associé à un composé de zinc. Ces compositions conviennent tout particulièrement pour la fabrication d'emballages tels que des feuilles calandrées ou des corps creux transparents présentant une excellente coloration initiale.

A titre d'exemples de systèmes calcium-zinc, on peut citer ceux à base de savons de calcium et de zinc. Avantageusement, on utilise des sels de zinc et de calcium d'acides aliphatiques monocarboxyliques ayant de 6 à 30 atomes de carbone tels que par exemple les acides stéarique, palmitique, 2-éthylhexanoïque, etc. La proportion relative du calcium au zinc est généralement comprise entre 1 et 5 atomes de calcium pour 1 atome de zinc.

Les doses des stabilisants thermiques primaires sont celles usuellement utilisées. On incorpore donc généralement de 0,1 à 10 parties en poids de stabilisant thermique primaire dans 100 parties de polymère et, de préférence, de 0,2 à 1 partie en poids de stabilisant thermique primaire dans 100 parties de polymère.

Des compositions tout particulièrement préférées de la présente invention contiennent donc de 1,5 à 2,5 parties d'ester partiel de pentaérythritol tel que défini ci-dessus et de 0,2 à 1 partie pour 100 parties en poids de polymère du chlorure de vinyle d'un stabilisant thermique primaire du type des systèmes calcium-zinc.

Il est entendu que les compositions selon l'invention peuvent contenir, outre le stabilisant thermique primaire et l'ester partiel de pentaérythritol, d'autres ingrédients usuels tels que par exemple, des agents facilitant la mise en oeuvre, des agents renforçants, des pigments, des lubrifiants ou encore des stabilisants thermiques auxiliaires des polymères du chlorure de vinyle.

Par polymères du chlorure de vinyle, on entend désigner tous les polymères contenant au moins 50 % molaires, et de préférence au moins 70 % molaires, d'unités monomériques dérivées du chlorure de vinyle. Les polymères du chlorure de vinyle qui conviennent à la réalisation des compositions selon l'invention comprennent donc aussi bien les homopolymères du chlorure·de vinyle que ses copolymères contenant des unités monomériques dérivées d'un ou de plusieurs comonomères. Ces copolymères peuvent être des copolymères statistiques, des copolymères à blocs ou encore des copolymères greffés sur un tronc quelconque. A titre d'exemples de comonomères du chlorure de vinyle, on peut citer les oléfines telles que l'éthylène, le propylène et le styrène, les esters tels que l'acétate de vinyle et les acrylates et les méthacrylates d'alkyle, les dérivés vinylidéniques tels que le chlorure et le fluorure de vinylidène.

De préférence, les compositions suivant l'invention sont à base d'homopolymères du chlorure de vinyle.

Le mode de fabrication des polymères du chlorure de vinyle mis en oeuvre peut être quelconque. On peut donc utiliser indifféremment pour la fabrication de compositions selon l'invention des polymères du chlorure de vinyle obtenus par polymérisation en masse, en phase gazeuse, en solution ou encore en émulsion ou en dispersion aqueuses.

L'incorporation des stabilisants thermiques dans le polymère du chlorure de vinyle ne pose aucun problème particulier. Ceux-ci sont mélangés avec le polymère, de manière connue en soi, par exemple, au moment de la fabrication du prémélange. Un mode opératoire particulièrement avantageux pour la fabrication de compositions selon l'invention consiste à mélanger sur mélangeur rapide le polymère du chlorure de vinyle avec les ingrédients solides de la composition (comprenant notamment l'ester partiel de pentaérythritol) et à incorporer à ce mélange, lorsque sa température a atteint 60°C environ, les ingrédients liquides de la composition. On continue alors à faire tourner le mélangeur rapide jusqu'à ce que le mélange final ait atteint une température de 100 à 125°C environ avant de le décharger dans un mélangeur lent pour le refroidir jusqu'à 30°C environ.

Les compositions stabilisées à la chaleur conformes à l'invention sont aptes à la mise en oeuvre par tous les procédés classiques de transformation des matières plastiques. Ces compositions conviennent tout particulièrement pour la fabrication de feuilles et de corps creux -flacons, bouteilles et autres récipients - destinés à l'emballage de liquides et de solides. Elles conviennent tout particulièrement pour la fabrication de bouteilles pour le conditionnement de liquides alimentaires tels que par exemple le vinaigre, l'huile, l'eau, etc., par extrusion-soufflage à l'aide de machines fonctionnant à cadence élevée.

Pour cette application, il est particulièrement préféré de faire appel à des compositions contenant, comme stabilisant thermique primaire, un système calcium-zinc, et, comme stabilisant thermique secondaire, un stéarate ou un laurate de pentaérythritol de taux moyen d'estérification allant de 1,1 à 1,3 et soluble à raison de 100 % dans le dichlorméthane à 25°C.

Les compositions ci-dessus conviennent en effet tout particulièrement pour la fabrication de bouteilles transparentes, peu ou pas colorées.

Les exemples qui suivent illustrent l'invention sans toutefois la limiter. Dans tous les exemples, on a utilisé comme polymère du chlorure de vinyle un polychlorure de vinyle de nombre K = 58 (mesuré dans le 1,2-dichloréthane à 25°C) obtenu par polymérisation en suspension aqueuse.

Les compositions ont toutes été fabriquées suivant le mode opératoire décrit plus haut. Elles contiennent toutes un pigment bleu.

La stabilité thermique à court terme (coloration initiale) est évaluée sur des crêpes obtenus par malaxage des compositions à 160°C (malaxeur à deux cylindres) pendant 5 minutes. Cette coloration est cotée de 1 à 5 :

1 correspond à une coloration très bleue

5 correspond à une coloration très verte.

Les valeurs intermédiaires correspondent à des colorations initiales de nuance intermédiaire.

La stabilité thermique à long terme est déterminée par la mesure du temps qui s'écoule avant qu'une feuille d'une épaisseur de 1 mm environ (découpée dans le crêpe) et maintenue à 180°C ne noircisse.

La facilité de mise en oeuvre des compositions est évaluée par extrusion d'une paraison tubulaire à 200°C (température de la filière).

Dans tous les exemples, on a évalué les compositions suivantes, les teneurs étant exprimées en poids :

| | |
|---|---|
| polychlorure de vinyle | 100 |
| modifiant acrylique | 7,50 |
| huile de soja époxydée | 5 |
| cire de polyéthylène | 0,15 |
| cire minérale | 0,50 |
| stéarate de calcium | 0,20 |
| éthylhexanoate de zinc | 0,25 |
| mélange maître contenant un pigment bleu | 1 |
| stabilisant thermique secondaire (suivant détails ci-dessous) | 2 |

Les exemples 1 à 5 concernent des compositions contenant des produits d'estérification de pentaérythritol et d'acide stéarique.

Les exemples 6 et 7 concernent des compositions contenant des produits d'estérification de pentaérythritol et d'acide laurique.

Les exemples 1 à 3 concernent des compositions selon l'invention contenant des produits d'estérification de pentaérythritol et d'acide stéarique, solubles à 100 % dans le dichlorméthane à 25°C, et présentant un taux moyen d'estérification compris entre 1 et 2.

L'exemple 4, de référence, concerne une composition contenant un produit d'estérification soluble à raison de 80 % en poids dans le dichlorméthane à 25°C.

L'exemple 5, de référence, concerne une composition contenant un produit d'estérification soluble à 100 % dans le dichlorméthane mais dont le taux moyen d'estérification est supérieur à 2.

L'exemple 6 concerne une composition selon l'invention contenant un produit d'estérification soluble à 100 % dans le dichlorméthane à 25°C, et présentant un taux moyen d'estérification de 1,7.

L'exemple 7 concerne une composition selon l'invention contenant un produit d'estérification soluble à 100 % dans le dichlorméthane à 25°C, et présentant un taux moyen d'estérification de 1,1.

Le taux d'estérification des esters partiels utilisés dans les exemples est repris au Tableau 1. Dans ce même tableau sont consignés les résultats de l'évaluation de la stabilité thermique à court terme (coloris initial à 160°C), de la stabilité thermique à long terme (à 180°C) et de la facilité de mise en oeuvre (extrusion à 200°C) de ces sept compositions.

La comparaison des résultats des exemples 1 à 3, 6 et 7, et plus particulièrement encore des exemples 1 et 7, avec ceux des exemples 4 et 5, de référence, montre que les compositions suivant l'invention présentent à la fois une bonne stabilité thermique à court et à long termes, ainsi qu'une grande facilité de mise en oeuvre. Elles conviennent parfaitement pour la fabrication de feuilles et de corps creux sur des machines industrielles fonctionnant à cadence élevée.

Par contre, les compositions suivant les exemples de référence 4 et 5 sont déficientes, soit du point de vue de la mise en oeuvre à l'échelle industrielle (exemple 4R), soit du point de vue du coloris initial des objets façonnés résultants (exemple 5R).

TABLEAU 1

| N° de l'exemple | Taux moyen d'estéri-fication | Evaluation des compositions | | |
|---|---|---|---|---|
| | | Coloration initiale (à 160°C) | Stabilité ther-mique à long terme (à 180°C) | Comportement à l'extrusion (à 200°C) |
| 1 | 1,2 | 2 | 70 | aucun problème, pas de dépôts dans la filière. |
| 2 | 1,5 | 2 | 65 | |
| 3 | 1,8 | 3 | 65 | |
| 4R | 1 | 1 | 90 | dépôts dans la filière. |
| 5R | 4 | 5 | 65 | aucun problème. |
| 6 | 1,7 | 2 | 70 | aucun problème, pas de dépôts dans la filière. |
| 7 | 1,1 | 1 à 2 | 80 | |

R E V E N D I C A T I O N S

1 - Compositions stabilisées à la chaleur à base de polymères du chlorure de vinyle comprenant un stabilisant thermique primaire et un ester partiel de pentaérythritol, caractérisées en ce que l'ester partiel de pentaérythritol est choisi parmi les produits résultant de l'estérification partielle du pentaérythritol et d'un acide gras qui présentent un taux moyen d'estérification compris entre 1 et 2 et qui sont solubles à raison de 95 % au moins dans le dichlorméthane à 25°C.

2 - Compositions suivant la revendication 1, caractérisées en ce que l'ester partiel de pentaérythritol est soluble à raison de 99 % au moins dans le dichlorméthane à 25°C.

3 - Compositions suivant la revendication 2, caractérisées en ce que l'ester partiel de pentaérythritol est totalement soluble dans le dichlorméthane à 25°C.

4 - Compositions suivant la revendication 1, caractérisées en ce que l'ester partiel de pentaérythritol dérive d'un acide gras choisi parmi les acides aliphatiques, saturés ou éthyléniquement insaturés, comprenant de 3 à 30 atomes de carbone au total.

5 - Compositions suivant la revendication 4, caractérisées en ce que l'acide gras est choisi parmi les acides stéarique et laurique.

6 - Compositions suivant l'une quelconque des revendications 1 à 5, caractérisées en ce que l'ester partiel de pentaérythritol présente un taux moyen d'estérification allant de 1,1 à 1,5.

7 - Compositions suivant la revendication 6, caractérisées en ce que l'ester partiel de pentaérythritol présente un taux moyen d'estérification allant de 1,1 à 1,3.

8 - Compositions suivant l'une quelconque des revendications 1 à 7, caractérisées en ce que le stabilisant thermique primaire est choisi parmi les systèmes calcium-zinc.

9 - Compositions suivant la revendication 8, caractérisées en ce que le stabilisant thermique primaire est choisi parmi les systèmes à base de sels de calcium et de zinc dérivés d'acides aliphatiques monocarboxyliques ayant de 6 à 30 atomes de carbone.

- 2 -

0003156

10 - Compositions suivant l'une quelconque des revendications 1 à 9, caractérisées en ce qu'elles contiennent de 1,5 à 2,5 parties d'ester partiel de pentaérythritol et de 0,2 à 1 partie de stabilisant thermique primaire du type des systèmes calcium-zinc pour 100 parties en poids de polymère du chlorure de vinyle.

## RAPPORT DE RECHERCHE EUROPEENNE

0003156
Numéro de la demande

EP 79 20 0022

| Catégorie | Citation du document avec indication, en cas de besoin, des parties pertinentes | Revendication concernée | CLASSEMENT DE LA DEMANDE (Int. Cl.²) |
|---|---|---|---|
| **DOCUMENTS CONSIDERES COMME PERTINENTS** | | | |
| D | <u>DE - A - 1 669 975</u> (DYNAMIT NOBEL)<br>* Page 3, dernier alinea; page 11, exemple 3, revendications * | 1-10 | C 08 L 27/06<br>C 08 K 5/00 |
| | -- | | |
| | <u>US - A - 3 929 699</u> (W.F. BERNHOLZ)<br>* Revendications; colonne 5, lignes 23-28; tableau 1 * | 1,9,10 | |
| | -- | | |
| P | <u>FR - A - 2 365 603</u> (NEYNABER CHEMIE)<br>& BE - A - 858 908<br>& DE - A - 2 642 509<br>* Page 1, ligne 34 - page 2, ligne 11; exemple 1 et revendications * | 1-10 | **DOMAINES TECHNIQUES RECHERCHES (Int. Cl.²)**<br><br>C 08 K 5/00<br>5/10<br>C 08 L 27/06<br>27/04<br>27/00 |
| | -- | | |
| A | <u>FR - A - 878 665</u> (I.G. FARBEN)<br>* Page 1, lignes 36-39 et ligne 24; résumé * | | |
| | -- | | |
| A | <u>FR - A - 950 205</u> (B.F. GOODRICH)<br>* Résumé * | | |
| | ---- | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-04-1979 | LENSEN |

OEB Form 1503.1 06.78